# FASCICULE DE BREVET EUROPEEN

(11) **EP 3 342 714 B1**
(45) Date de publication et mention de la délivrance du brevet: **17.04.2019**
(21) Numéro de dépôt: 17198622.7
(22) Date de dépôt: 26.10.2017
(51) Int. Cl.: B64D 15/16, B29C 65/00

(54) **DISPOSITIF DE DEGIVRAGE DE TYPE PNEUMATIQUE POUR BRISER ET RETIRER UN DEPOT DE GLACE ACCUMULEE SUR LA SURFACE EXTERIEURE D'UN AERONEF**
ENTEISUNGSVORRICHTUNG PNEUMATISCHER ART ZUM AUFBRECHEN UND ENTFERNEN EINER EISSCHICHT, DIE SICH AUF DER AUSSENSEITE EINES LUFTFAHRZEUGS AKKUMULIERT HAT
PNEUMATIC DE-ICING DEVICE FOR BREAKING UP AND REMOVING AN ICE DEPOSIT BUILT UP ON THE OUTSIDE SURFACE OF AN AIRCRAFT

(30) Priorité: 27.12.2016 FR 1663421
(43) Date de publication de la demande: 04.07.2018
(73) Titulaire: Zodiac Aerosafety Systems, 78370 Plaisir (FR)
(72) Inventeur: BRIAND, Valérie, 27670 SAINT-OUEN-DU-TILLEUL (FR)
(74) Mandataire: Cabinet Netter

(56) Documents cités:
- EP-A1- 0 066 519
- EP-A2- 0 806 342
- WO-A1-02/42150
- WO-A1-91/12173
- US-A- 4 101 497
- US-A- 5 558 304

## Description

La présente invention concerne un dispositif de dégivrage de type pneumatique pour briser et retirer un dépôt de glace accumulée sur la surface extérieure d'un aéronef.

En particulier, quoique non exclusivement, le dispositif de dégivrage est destiné à équiper les ailes, les empennages, les entrées d'air moteur ou d'autres pièces similaires appartenant à des aéronefs tels que des avions ou des hélicoptères.

Il est connu, lorsque ces aéronefs traversent des zones où les conditions météorologiques sont rigoureuses et défavorables, que du givre peut notamment se former à plus ou moins long terme sur ces surfaces aérodynamiques. Ce dépôt de givre peut engendrer par la suite un alourdissement et une modification du profil aérodynamique de l'aile susceptibles de modifier la portance et la traînée de l'aéronef et donc le comportement en vol de l'aéronef. Ainsi, ces surfaces peuvent être équipées de dispositifs de dégivrage du type à résistance électrique ou à enveloppe gonflable.

Dans ce dernier cas, auquel se rapporte l'invention, les dispositifs de dégivrage connus comportent de manière générale une enveloppe souple qui recouvre au moins partiellement ladite surface et qui peut se gonfler rapidement. Ainsi, lorsque du givre se forme sur la surface aérodynamique du gaz sous pression est envoyé dans l'enveloppe. L'enveloppe subit alors une expansion brutale qui engendre la rupture de la couche de givre en une pluralité de morceaux, puis l'éjection de ceux-ci de ladite surface. De tels dispositifs sont notamment décrits dans le brevet FR2749562A1 ou le brevet US2002084382. Le brevet EP0066519 A1 décrit un dispositif selon le préambule de la revendication 1.

Or, ces dispositifs présentent un inconvénient majeur car l'enveloppe souple, en général de type multicouche, est lourde, notamment par l'utilisation d'une couche intermédiaire qui est très épaisse, et nécessite l'application d'une couche de colle qui engendre du temps de main d'oeuvre.

Or, la recherche de la réduction de masse est un leitmotiv en aéronautique car l'allégement permet de réaliser des économies substantielles de carburant ce qui constitue un plus vis-à-vis de l'environnement et des coûts d'exploitation.

Un but de la présente invention est donc de résoudre les problèmes cités précédemment et de proposer une solution simple et rapide à mettre en oeuvre, légère et fiable, en supprimant les couches intermédiaires de liaison et en utilisant un matériau compatible avec la couche externe et présentant des propriétés remarquables de résistance au froid.

Ainsi, la présente invention a pour objet un dispositif selon la revendication 1.

Selon des modes de réalisation préférés, le dispositif conforme à la présente invention comprend l'une au moins des caractéristiques suivantes :
- la couche intercalaire en épichlorhydrine est calandrée avec la couche externe ou avec la couche en textile tricoté ;
- la couche intercalaire en épichlorhydrine est reliée à la couche en textile tricoté par adhérisation de cette dernière ;
- la couche intercalaire d'épichlorhydrine comporte deux couches superposées disposées entre la couche en textile tricoté et la couche externe ;
- le grade de l'épichlorhydrine utilisée présente une température de transition vitreuse inférieure à environ -50°C et de préférence inférieure à environ -60°C ;
- l'épichlorhydrine utilisée est un ter-polymère, par exemple dans lequel un oxyde de polypropylène est introduit à la place de l'oxyde d'éthylène ;
- la couche externe est réalisée en polyuréthane élastomère vulcanisable, par exemple de type polyéther, et ladite couche externe et la couche intercalaire en épichlorhydrine sont liées entre elles par des liaisons chimiques de co-vulcanisation, par exemple de type réticulation au souffre ou au peroxyde ;
- l'épaisseur de l'ensemble constitué par la couche externe et la totalité de la couche intercalaire en épichlorhydrine est comprise entre environ 0,6 mm et 1 mm, et de préférence inférieure à d'environ 0,8 mm ; et
- la couche externe renferme des charges de carbone.

L'invention va maintenant être décrite plus en détail en référence à des modes de réalisation particuliers donnés à titre d'illustration uniquement et représentés sur les figures annexées dans lesquelles :
- La figure 1 est une vue en coupe schématique d'un premier mode de réalisation d'un dispositif de dégivrage pour aéronef conforme à la présente invention,
- La figure 2 est une variante de réalisation de la figure 1.

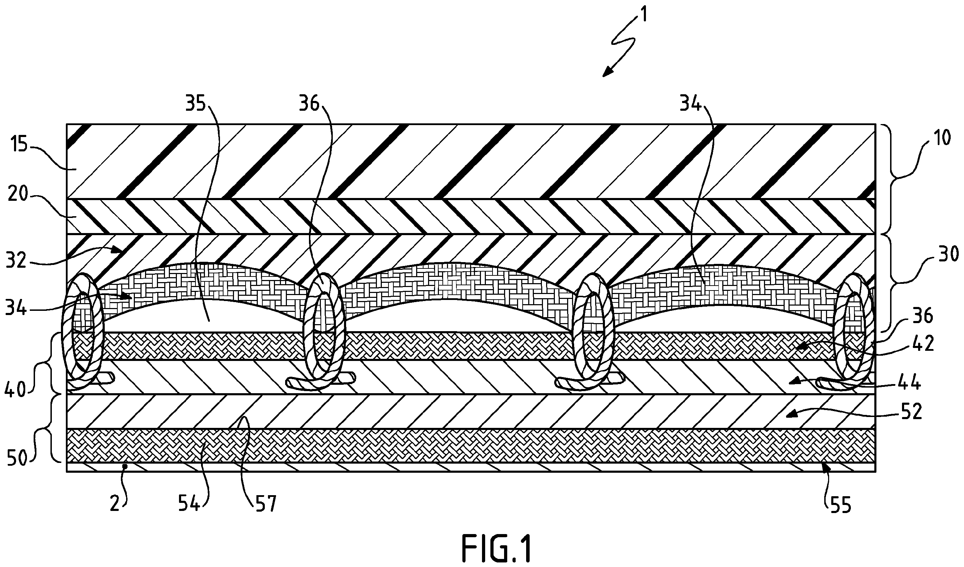

La figure 1 représente un dispositif 1 de dégivrage de type pneumatique pour briser et retirer un dépôt de glace accumulée sur la surface extérieure d'un aéronef, par exemple d'une aile d'avion dans le cas présent.

Le dispositif 1 comporte, de l'extérieur vers la surface 2 de l'aéronef :
- une couche externe 15 destinée à résister à l'environnement extérieur (fluides, abrasion, projections de cailloux) et sur laquelle du givre peut être amené à se déposer. Cette couche externe 15 est typiquement réalisée en polyuréthane (PU) élastomère vulcanisable de type polyuréthane polyéther, un élastomère polaire permettant de résister aux fluides. Une couche 20 en matériau élastomère polaire tel que l'épichlorhydrine est calandrée avec la couche 15 pour former une feuille 10. Avantageusement la couche en polyuréthane 15 sera de couleur noire et la couche en épichlorhydrine 20 sera formulée d'une couleur différente, de préférence plus claire pour assurer un détrompage visuel lors de la pose de la feuille 10 ;
- une couche intermédiaire externe 30 comportant une couche 32 en matériau élastomère polaire tel que l'épichlorhydrine et une couche 34 de tricot textile déformable qui permet le gonflement de chambres internes 35 reliées à un dispositif d'injection d'air sous pression (non représenté). La couche d'épichlorhydrine 32 est liée à la couche textile 34 par exemple par adhérisation de cette dernière ;
- une couche intermédiaire interne 40, formant les chambres internes gonflables 35 avec la couche en tricot textile 34 de la couche intermédiaire externe 30. Cette couche intermédiaire interne 40 comporte une couche textile 42, par exemple obtenu par tissage, et une couche 44 constituée de préférence d'un élastomère, par exemple un élastomère de type naturel (NR), polyisoprène (IR), polybutadiène (BR), chloroprène (CR), polyuréthane (PU) ou épichlorhydrine (ECO). Les couches intermédiaires externe 30 et interne 40 sont reliées l'une à l'autre à l'aide d'un réseau de points de couture espacés 36 pour former les chambres internes 35 entre eux ;
- une couche interne d'interface 50 destinée à être liée à la surface extérieure 2 de l'aéronef, de préférence par collage de sa surface. Cette couche interne d'interface 50 comporte une couche de caoutchouc 52 et une couche textile 54 dont la surface intérieure 55 est collée à la surface extérieure 2 de l'aéronef. A cet effet, la surface intérieure 55 est traitée ou non par une solution d'adhérisation.

La couche textile 54 est par exemple un textile tricoté, un textile tissé, un textile non tissé obtenu par voie mécanique, par collage ou par soudure, un textile à nappe tramée, un textile à grille ou un tissu unidirectionnel (UD). Cependant, une couche textile obtenue par tissage identique à la couche textile 42 sera préférablement choisie. Un tissé sera plus facile à imprégner / étancher par la colle comparativement à un tricot, il sera également plus résistant mécaniquement (notamment en déchirure) que les renforts textiles de type non tissé ou UD ou nappe tramée ou grille.

La couche textile 54 est constituée par un matériau appartenant à la liste comprenant le polyamide, le polyester, la rayonne, le coton, le verre, le polyéthylène, le polypropylène, l'aramide, la para-aramide, le polytétrafluoroéthylène (PTFE), la polyétheréthercétone (PEEK), ou le carbone, ou une combinaison de de ces matériaux. Une préférence sera donnée au polyamide présentant en général de bonnes adhérences et un coût moins élevé que les aramides ou le carbone.

La surface extérieure 57 de la couche textile 54 est traitée par une solution d'adhérisation plein bain, par exemple de type RFL (Résorcine, Formol, Latex), à solution comprenant des isocyanates ou à résines réactives. Cette surface extérieure 57 peut également avoir subi un traitement électrostatique, par exemple de type Corona, par plasma atmosphérique ou par fibroline.

La couche textile 54 pourra être teinte, des fils teints dans la masse pourront aussi être utilisés dans sa constitution.

La couche de caoutchouc 52 est constituée quant à elle de préférence d'un élastomère, par exemple un élastomère de type naturel (NR), polyisoprène (IR), polybutadiène (BR), chloroprène (CR), polyuréthane (PU) ou épichlorhydrine (ECO). Cette couche n'étant pas soumise à l'environnement extérieur et ne nécessitant pas une excellente élasticité à froid, contrairement à la couche 32 qui doit pouvoir se gonfler, de nombreux autres élastomères peuvent convenir.

La couche de caoutchouc 52 présente une épaisseur d'environ 0,10 à 0,30 mm et avantageusement de 0,15 à 0,25 mm (0,20 mm ± 0,05 mm). L'épaisseur de cette couche est optimisée pour permettre d'étancher les points de coutures 36 tout en utilisant la masse minimum nécessaire pour assurer cette fonction sans réduire la fiabilité de tenue au cyclage du dégivreur.

Typiquement on pourra utiliser un tissu de masse surfacique maximum de 400 g/m² pour réaliser la couche textile 54, sachant qu'au-delà de 300 g/m², le gain de masse apporté n'est plus vraiment significatif pour l'application. Dans l'exemple proposé, la couche textile 54 présente une masse surfacique inférieure à 120 g/m². La couche d'élastomère 52 présentant quant à elle une épaisseur optimisée, la masse surfacique totale de la couche interne 50 est d'environ 335 g/m², ce qui représente un gain de 295 g/m² par rapport à la couche de l'art antérieur qui présente une masse surfacique d'environ 630 g/m².

La couche 40 est obtenue par calandrage de la couche 44 sur le textile adhérisé 42.

Ainsi, la couche 50 pourra être obtenue en utilisant le matériau de la couche 40 dans le sens opposé (tête-bêche), les deux couches d'élastomère 44 et 52 étant liées l'une à l'autre, de préférence par co-vulcanisation. Ainsi d'un point de vue industriel les couches 40 et 50 peuvent être réalisées à partir du même matériau, ce qui permet de diminuer le nombre de références.

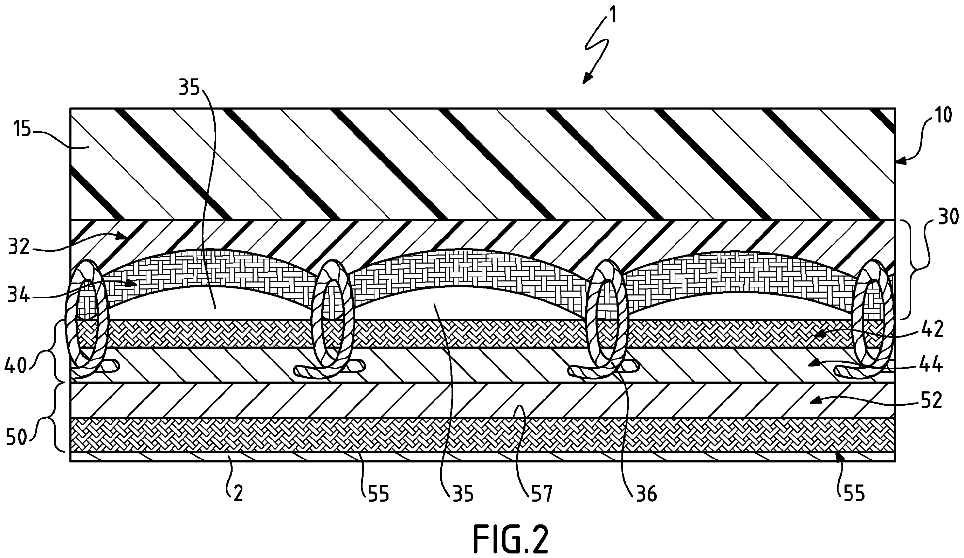

Selon une variante de réalisation représentée sur la figure 2, la couche 20 n'existe pas (la feuille 10 est entièrement constituée par la couche 15 en polyuréthane) et seule la couche 32 d'épichlorhydrine est prévue entre la couche textile 34 et la couche externe 15.

Typiquement, l'épaisseur de l'ensemble constitué par la couche de polyuréthane 15 et la couche d'épichlorhydrine (couche 32 ou couches 20 et 32) est comprise entre environ 0,6 mm et 1 mm, et de préférence inférieure à d'environ 0,8 mm. Ceci est dû au fait qu'il n'est plus nécessaire de prévoir une couche intermédiaire de liaison relativement épaisse (0,20 à 0,35 mm au minimum dans l'art antérieur) ainsi que la ou les couche (s) de colle dans la liaison entre la couche intermédiaire externe 30 et la couche externe 15.

Or, dans l'art antérieur ces colles utilisaient des produits en phase solvant. Ces produits sont nocifs pour l'environnement et non souhaitables pour les opérateurs du fait des risques de nocivités associés. La solution ainsi présentée permet, en plus du gain notable de poids (de 10 à 15%), de simplifier le processus industriel par la suppression des couches de colles et la réduction du nombre de composants. Cette simplification permet également une amélioration de la fiabilité, une meilleure tenue au cyclage.

Dans les deux modes de réalisation, le type d'épichlorhydrine à utiliser doit être judicieusement choisi pour la conservation de sa souplesse au froid car le gonflage des chambres doit pouvoir se faire jusqu'à des températures très basses de l'ordre de -45°C. Ainsi, la température de transition vitreuse du grade d'épichlorhydrine choisie doit être inférieure à -50°C et de préférence inférieure à environ -60°C.

On pourra trouver ce type de grade parmi les caoutchoucs d'épichlorhydrine de type ter-polymère (GECO). Un exemple de grade pouvant convenir est un épichlorhydrine de type GECO dans lequel est introduit un oxyde de propylène à la place de l'oxyde d'éthylène (EO) habituellement utilisé. Cette configuration lui permet d'atteindre des propriétés remarquables au froid.

Contrairement aux matériaux habituellement utilisés (caoutchouc naturel par exemple) qui sont des élastomères non polaires l'épichlorhydrine est un élastomère polaire ce qui va permettre la réalisation d'une liaison chimique directement avec le polyuréthane sans couche intermédiaire ni colles. L'avantage de cette couche épichlorhydrine est qu'elle permet une liaison de type co-vulcanisation avec le polyuréthane élastomère constituant la couche extérieur du dégivreur.

Le fonctionnement du dispositif 1 conforme à la présente invention, lorsqu'il est collé sur la surface extérieure 2 d'un aéronef, est le suivant.

Lorsque du givre s'est déposé en plaque sur la couche externe 10, un gaz sous pression est injecté dans les chambres gonflables 35 de manière à déformer très rapidement la couche textile 34 de la couche intermédiaire externe 30 sous l'effet du gaz injecté. Cette action mécanique brutale du dispositif de dégivrage 1 brise et expulse ledit givre à l'extérieur, de sorte que la surface 2 de l'aéronef n'est plus sujette à des dysfonctionnements. Ce gonflement peut être réalisé de manière répétée pour optimiser la rupture et l'expulsion du givre. En général il y a deux cycles différents, un rapide et un lent. En fonction des conditions de givrage (accrétion lente/faible ou rapide/forte), on choisit soit le mode lent soit le mode rapide.

La solution ainsi présentée permet un gain non négligeable de poids grâce à l'utilisation d'un nombre inférieure de couches et/ou d'une gestion optimisée de leurs épaisseurs et masses surfaciques respectives, tout en facilitant la fabrication du dispositif de dégivrage dans le cas où les couches 40 et 50 sont identiques et liées tête bêche l'une à l'autre.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, les couches 44 et 52 peuvent être constituées de deux couches.

## Revendications

1. Dispositif de dégivrage (1) de type pneumatique pour briser et retirer un dépôt de glace accumulée sur la surface extérieure (2) d'un aéronef, en particulier sur une aile d'avion, comprenant au moins :
- une couche externe (15) destinée à résister à l'environnement extérieur,
- une couche interne d'interface (50) destinée à être liée à la surface extérieure (2) de l'aéronef, de préférence par collage, et
- au moins deux couches intermédiaires externe (30) et interne (40) reliées entre elles par un réseau de points de couture espacés (36) afin de définir des chambres dégivrantes (35) pouvant être gonflées rapidement à l'aide d'air injecté sous pression de manière à créer une expansion du dispositif provoquant une action mécanique de rupture de la glace, la couche intermédiaire externe (30) comportant une couche (34) en textile tricoté déformable élastiquement sous l'effet du gonflage,
- une couche intercalaire ((20, 32) ou (32)) en matériau élastomère polaire disposée au-dessus de la couche en textile tricoté (34) de la couche intermédiaire externe (30) et immédiatement au contact de la couche externe (15) et de la couche en textile tricoté (34),
**caractérisé en ce que** le matériau élastomère polaire ((20, 32) ou (32)) est l'épichlorhydrine.

2. Dispositif selon la revendication 1, **caractérisé en ce que** la couche intercalaire ((20, 32) ou (32)) en épichlorhydrine est calandrée avec la couche externe (15) ou avec la couche en textile tricoté (34).

3. Dispositif selon la revendication 1, **caractérisé en ce que** la couche intercalaire en épichlorhydrine ((20, 32) ou (32)) est reliée à la couche en textile tricoté (34) par adhérisation de cette dernière.

4. Dispositif selon l'une quelconque des revendications précédentes, **caractérisé en ce que** la couche intercalaire d'épichlorhydrine (20, 32) comporte deux couches superposées disposées entre la couche en textile tricoté (34) et la couche externe (15).

5. Dispositif selon l'une quelconque des revendications précédentes, **caractérisé en ce que** le grade de l'épichlorhydrine utilisée présente une température de transition vitreuse inférieure à environ -50°C et de préférence inférieure à environ -60°C.

6. Dispositif selon la revendication 5, **caractérisé en ce que** l'épichlorhydrine utilisée est un ter-polymère, par exemple dans lequel un oxyde de polypropylène est introduit à la place de l'oxyde d'éthylène.

7. Dispositif selon l'une quelconque des revendications 4 à 6, **caractérisé en ce que** la couche externe (15) est réalisée en polyuréthane élastomère vulcanisable, par exemple de type polyéther, et ladite couche externe (15) et la couche intercalaire en épichlorhydrine (20, 32) sont soudées entre elles par des liaisons chimiques de co-vulcanisation, par exemple de type réticulation au souffre ou au peroxyde.

8. Dispositif selon l'une quelconque des revendications précédentes, **caractérisé en ce que** l'épaisseur de l'ensemble constitué par la couche externe (15) et la totalité de la couche intercalaire en épichlorhydrine ((20, 32) ou (32)) est comprise entre environ 0,6 mm et 1 mm, et de préférence inférieure à d'environ 0,8 mm.

## Patentansprüche

1. Enteisungsvorrichtung (1) pneumatischer Art zum Aufbrechen und Entfernen einer Eisschicht, die sich auf der Außenseite (2) eines Luftfahrzeugs akkumuliert hat, insbesondere an einem Luftfahrzeugflügel, mindestens Folgendes umfassend:
- eine Außenschicht (15), die dazu bestimmt ist, der äußeren Umgebung zu widerstehen,
- eine innere Schnittstellenschicht (50), die zur Verbindung mit der Außenseite (2) des Luftfahrzeugs bestimmt ist, vorzugsweise durch Verklebung, und
- mindestens zwei äußere (30) und innere (40) Zwischenschichten, die durch ein Netz von beabstandeten Nähten (36) miteinander verbunden sind, um Enteisungskammern (35) zu definieren, die schnell mit unter Druck eingespritzter Luft aufgeblasen werden können, um eine Ausdehnung der Vorrichtung zu erzeugen, die eine mechanische Eisbrechwirkung verursacht, wobei die äußere Zwischenschicht (30) eine Schicht (34) aus Gestrick umfasst, die unter der Wirkung des Aufblasens elastisch verformbar ist,
- eine Zwischenlagenschicht ((20, 32) oder (32)) aus polarem elastomeren Material, die über der Schicht aus Gestrick (34) der äußeren Zwischenschicht (30) angeordnet ist und unmittelbar mit der Außenschicht (15) und der Schicht aus Gestrick (34) in Kontakt steht,
**dadurch gekennzeichnet, dass** das polare elastomere Material ((20, 32) oder (32)) Epichlorhydrin ist.

2. Vorrichtung nach Anspruch 1, **dadurch gekennzeichnet, dass** die Zwischenlagenschicht ((20, 32) oder (32)) aus Epichlorhydrin mit der Außenschicht (15) oder mit der Schicht aus Gestrick (34) kalandriert ist.

3. Vorrichtung nach Anspruch 1, **dadurch gekennzeichnet, dass** die Epichlorhydrin-Zwischenlagenschicht ((20, 32) oder (32)) mit der Schicht aus Gestrick (34) durch Anhaften dieser verbunden ist.

4. Vorrichtung nach einem der vorstehenden Ansprüche, **dadurch gekennzeichnet, dass** die Epichlorhydrin-Zwischenlagenschicht (20, 32) zwei übereinanderliegende Schichten aufweist, die zwischen der Schicht aus Gestrick (34) und der Außenschicht (15) angeordnet sind.

5. Vorrichtung nach einem der vorstehenden Ansprüche, **dadurch gekennzeichnet, dass** der verwendete Epichlorhydringehalt eine Glasübergangstemperatur von weniger als etwa -50 °C und vorzugsweise weniger als etwa -60 °C aufweist.

6. Vorrichtung nach Anspruch 5, **dadurch gekennzeichnet, dass** als Epichlorhydrin ein Terpolymer verwendet wird, beispielsweise in das anstelle von Ethylenoxid ein Polypropylenoxid eingebracht wird.

7. Vorrichtung nach einem der Ansprüche 4 bis 6, **dadurch gekennzeichnet, dass** die Außenschicht (15) aus vulkanisierbarem elastomeren Polyurethan, beispielsweise vom Polyethertyp, und die Außenschicht (15) und die Epichlorhydrin-Zwischenlagenschicht (20, 32) durch chemische Co-Vulkanisationsbindungen, beispielsweise vom Typ Schwefel oder Peroxid, miteinander verschweißt sind.

8. Vorrichtung nach einem der vorstehenden Ansprüche, **dadurch gekennzeichnet, dass** die Dicke der Anordnung, bestehend aus der Außenschicht (15) und der gesamten Epichlorhydrin-Zwischenlagenschicht ((20, 32) oder (32)), zwischen etwa 0,6 mm und 1 mm und vorzugsweise weniger als etwa 0,8 mm beträgt.

## Claims

1. A pneumatic deicing device (1) for breaking and removing an ice deposit accumulated on the outer surface (2) of an aircraft, comprising at least:
- an outer layer (15) made from polyurethane intended to withstand an outside environment, preferably,
- an inner interface layer (50) connected to the outer surface (2) of the aircraft, and
- at least two outer (30) and inner (40) intermediate layers connected to one another by an array of stitches (36) spaced apart so as to define deicing chambers (35) that can be inflated quickly using injected pressurized air so as to create an expansion of the device causing a mechanical action to break the ice, the outer intermediate layer being made of a deformable knit textile layer (34) that is elastically deformable under the effect of the inflation,
- at least one interlayer (20, 32) or (32) made from polar elastomer material and arranged above the knit textile layer (34) of the outer intermediate layer (30) and immediately in contact with the outer layer (15) and the knit textile layer (34), **characterized in that** the polar elastomer material of the intermediate layer (20, 32) or (32) is epichlorohydrin.

2. The device of claim 1, **characterized in that** the interlayer (20, 32) or (32) made from epichlorohydrin is calendared with the outer layer (15) or with the knit textile layer (34).

3. The device of claim 1, **characterized in that** the interlayer made from epichlorohydrin (20, 32) or (32) is connected to the knit textile layer (34) by adhering.

4. The device of claim 1, **characterized in that** the epichlorohydrin interlayer (20, 32) includes two superimposed interlayers arranged between the knit textile layer (34) and the outer layer (15).

5. The device of claim 1, **characterized in that** the epichlorohydrin has a glass transition temperature below about -50°C.

6. The device of claim 5, **characterized in that** the epichlorohydrin is a terpolymer.

7. The device of claim 4, **characterized in that** the outer layer (15) is made from vulcanizable elastomer polyurethane, and the outer layer (15) and the epichlorohydrin interlayer (20, 32) are connected to one another by chemical co-vulcanization bonds.

8. The device of claim 1, **characterized in that** the thickness of the assembly formed by the outer layer (15) and all of the epichlorohydrin interlayer (20, 32) or (32) is between about 0.6 mm and 1 mm.
